# EUROPÄISCHE PATENTSCHRIFT

(11) **EP 2 439 095 B1**
(45) Veröffentlichungstag und Bekanntmachung des Hinweises auf die Patenterteilung: **26.06.2013**
(21) Anmeldenummer: 11184187.0
(22) Anmeldetag: 06.10.2011
(51) Int. Cl.: B60K 15/04, B60K 15/05

(54) **Automatische Verschlussvorrichtung für Kraftstofftanks**
Automatic locking device for fuel tanks
Dispositif de fermeture automatique pour réservoirs de carburant

(30) Priorität: 07.10.2010 DE 202010008751 U
(43) Veröffentlichungstag der Anmeldung: 11.04.2012
(73) Patentinhaber: Köhler Automobiltechnik GmbH, 59558 Lippstadt (DE)
(72) Erfinder: Bernd, Berens, 59505 Bad Sassendorf (DE); Josef, Brüggenolte, 59597 Bad Westernkotten (DE)
(74) Vertreter: Ter Meer Steinmeister & Partner

(56) Entgegenhaltungen:
- WO-A1-2005/084987
- DE-A1- 19 935 454

## Beschreibung

Die Erfindung betrifft eine automatische Verschlussvorrichtung für Kraftstofftanks, mit einem zum dichten Schließen eines Tankstutzens ausgebildeten Verschlussglied, das zwischen einer Öffnungsstellung und einer Schließstellung schwenkbar und mit Hilfe eines am Tankstutzen gehaltenen, einen Motor aufweisenden Antriebs und eines drehantreibbar am Tankstutzen angeordneten Bajonettrings in seiner Schließstellung verriegelbar ist.

Aus DE 299 13 204 U1ist eine Verschlussvorrichtung bekannt, bei der der Antrieb an der Fahrzeugkarosserie gehalten und über ein Gestänge mit dem Bajonettring verbunden ist. Wenn das Fahrzeug in eine Kollision verwickelt ist, in der die Karosserie im Bereich des Tankstutzens verformt wird, besteht die Gefahr, dass die Aufprallkräfte der Kollision über das Gestänge auf das Verschlussglied übertragen werden, so dass dieses nicht mehr dicht schließt und ein explosives Kraftstoff/Luft-Gemisch entweichen kann.

Aus DE 199 35 454 A1 und der gattungsbildenden WO 2005/084987 A1 sind Verschlussvorrichtungen der eingangs genannten Art bekannt, bei denen der Antrieb am Tankstutzen gehalten ist und eine Motor aufweist, dessen Achse rechtwinklig zur Achse des Tankstutzens verläuft und der über eine Stellstange oder einen Schneckentrieb mit dem Bajonettring verbunden ist.

Aufgabe der Erfindung ist es, eine Verschlussvorrichtung zu schaffen, die bei einer Kollision eine hohe Sicherheit bietet. eine eine kompakte Anordnung und eine erleichterte Montage erlaubt.

Diese Aufgabe wird dadurch gelöst, dass der Antrieb ein Ritzel aufweist, das mit einem Zahnkranz am Umfang des Bajonettrings kämmt, und dass die Achse des Ritzels und des Motors parallel zum Tankstutzen verlaufen.

Wenn sich bei einer Kollision die Karosserie im Bereich des Tankstutzens verformt, kann ein Teil der Aufprallenergie von der Karosserie aufgezehrt werden, ohne dass die Kollisionskräfte auf den Antrieb und das Verschlussglied übertragen werden. Selbst wenn der Aufprall so heftig ist, dass auch der Tankstutzen verformt wird, nimmt der Antrieb an der Bewegung des Tankstutzens teil, so dass auch in diesem Fall eine höhere Wahrscheinlichkeit besteht, dass die Dichtheit des Verschlusssystems gewährleistet bleibt.

Ein weiterer Vorteil besteht darin, dass die Montage des Verschlusssystems wesentlich erleichtert wird, da zumindest die Komponenten der Verschlussvorrichtung, die zur Verriegelung des Verschlussgliedes in seiner Schließstellung dienen, bereits fertig am Tankstutzen montiert werden können, bevor der Tank in das Fahrzeug eingebaut wird.

Der Antrieb weist ein Ritzel auf, das mit einem am Bajonettring gebildeten Zahnkranz kämmt. Das erlaubt eine besonders kompakte Anordnung, bei der die Achse des Ritzels und des zum Antrieb des Ritzels dienenden Motors parallel zum Tankstutzen verlaufen.

Vorteilhafte Ausgestaltungen und Weiterbildungen der Erfindung sind in den Unteransprüchen angegeben.

Bevorzugt sind der Bajonettring und der Antrieb in einer Manschette gehalten, die die Mündung des Tankstutzens umschließt. Auch das Schwenklager für das Verschlussglied kann an dieser Manschette angeordnet sein.

Gemäß einer vorteilhaften Weiterbildung ist an dem Bajonettring oder einem mit dem Bajonettring mitdrehbaren Teil ein Nocken gebildet, der die Schwenkbewegung des Verschlussgliedes steuert. Die durch den Antrieb bewirkte Drehung des Bajonettrings kann somit zugleich dazu genutzt werden, das Verschlussglied aus der Öffnungsstellung in die Schließstellung zu verschwenken oder umgekehrt. Beispielsweise kann das Verschlussglied durch eine Feder in die Öffnungsstellung vorgespannt sein. Der Nocken ist dann so ausgebildet und angeordnet, dass er auf einen Ansatz des Verschlussgliedes wirkt und dieses Verschlussglied entgegen der Federkraft in die Schließstellung schwenkt, bevor die endgültige Verriegelung mit Hilfe des Bajonettrings erfolgt.

Bei der aus DE 299 13 204 U1 bekannten Vorrichtung ist das Verschlussglied durch ein Gestänge mit einer Tankklappe gekoppelt, die eine Tanköffnung in der Karosserie verschließt, so dass beim Schließen der Tankklappe automatisch auch das Verschlussglied in die Schließstellung geschwenkt wird. Dasselbe ist auch bei der erfindungsgemäBen Vorrichtung möglich. Das Gestänge kann dann eine Sollbruchstelle aufweisen oder so schwach ausgebildet sein, dass bei einer Kollision die auf das Verschlussglied übertragenen Kräfte begrenzt werden. Wenn die Schwenkbewegung des Verschlussgliedes durch einen Nocken am Bajonettring gesteuert wird, ermöglicht es das Gestänge, mit Hilfe des Antriebs und des Nockens auch die Schließbewegung der Tankklappe zu steuern.

Im folgenden wird ein Ausführungsbeispiel der Erfindung anhand der Zeichnung näher erläutert.

Es zeigen:
- Fig. 1: einen axialen Schnitt durch einen Tankstutzen mit einer erfindungsgemäβen Verschlussvorrichtung;
- Fig. 2: einen Schnitt in einer gegenüber Fig. 1 um 90° gedrehten Schnittebene bei geöffnetem Verschlussglied; und
- Fig. 3: eine Schnittdarstellung entsprechend Fig. 2 für die geschlossene Position des Verschlussgliedes.

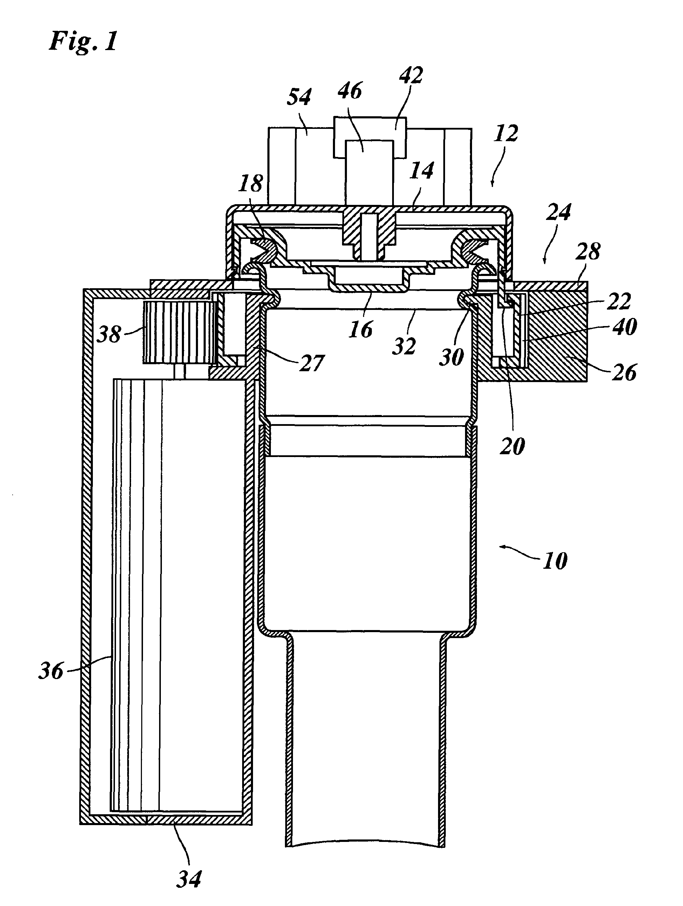

In Fig. 1 sind ein Tankstutzen 10 eines Kraftfahrzeugs und ein Verschlussglied 12, das die Öffnung des Tankstutzens 10 verschließt, in einem axialen Schnitt dargestellt. Das Verschlussglied 12 weist ein Deckeloberteil 14, ein Deckelunterteil 16 und eine umlaufende Dichtung 18 auf, die auf dem ungebörtelten oberen Rand des Tankstutzens 10 abdichtet. Zwischen Oberteil und Unterteil des Deckels kann ein nicht gezeigtes Über/Unterdruckventil untergebracht sein.

Das Deckelunterteil 16 weist an seinem Umfangsrand drei nach unten vorspringende, nach außen gekröpfte Bajonettklauen 20 auf, von denen in Fig. 1 nur eine zu erkennen ist. Diese Bajonettklauen 20 hintergreifen einen Bajonettring 22, der das obere Ende des Tankstutzens 10 umgibt. Der Bajonettring 22 ist drehbar und axialfest in einer den Tankstutzen umgebenden Manschette 24 gehalten. Die Manschette 24 weist ein aus zwei Halbringen 26, 27 zusammengesetztes Unterteil und ein ringförmiges Oberteil 28 auf, das sicher auf dem Unterteil befestigt ist. Die beiden Halbringe 26, 27 des Unterteils bilden am inneren Umfangsrand einen umlaufenden Wulst 30, der formschlüssig in eine Sicke 32 des Tankstutzens 10 eingreift.

Der Bajonettring 22 ist in einer Nut des Unterteils aufgenommen, die nach oben durch das Oberteil 28 abgeschlossen wird, so dass der Bajonettring nicht nach oben aus der Manschette 24 austreten kann. Das ringförmige Oberteil 28 und der Bajonettring 22 weisen am inneren Umfangsrand je drei Ausnehmungen auf, durch die die Bajonettklauen 20 des Verschlussgliedes hindurchtreten können. Fig. 1 zeigt den Bajonettring 22 in einem Zustand, in dem er so weit um die Achse des Tankstutzens 10 verdreht ist, dass die Bajonettklauen 20 versetzt zu den erwähnten Ausnehmungen liegen und vom oberen Rand des Bajonettrings 22 übergriffen werden. Auf diese Weise wird das Verschlussglied 12 formschlüssig in einer Position verriegelt, in der es die Öffnung des Tankstutzens 10 dicht verschließt.

Der Halbring 27 der Manschette 24 bildet ein Gehäuse 34, das sich seitlich längs des Tankstutzens 10 erstreckt und einen Motor 36 aufnimmt, dessen Ausgangswelle ein Ritzel 38 trägt. Das Ritzel 38 kämmt mit einem Zahnkranz 40, der am äußeren Umfang des Bajonettrings 22 gebildet ist. Auf diese Weise wird ein Antrieb gebildet, mit dem sich der Bajonettring 22 zwischen der Verriegelungsposition und der Entriegelungsposition verdrehen lässt.

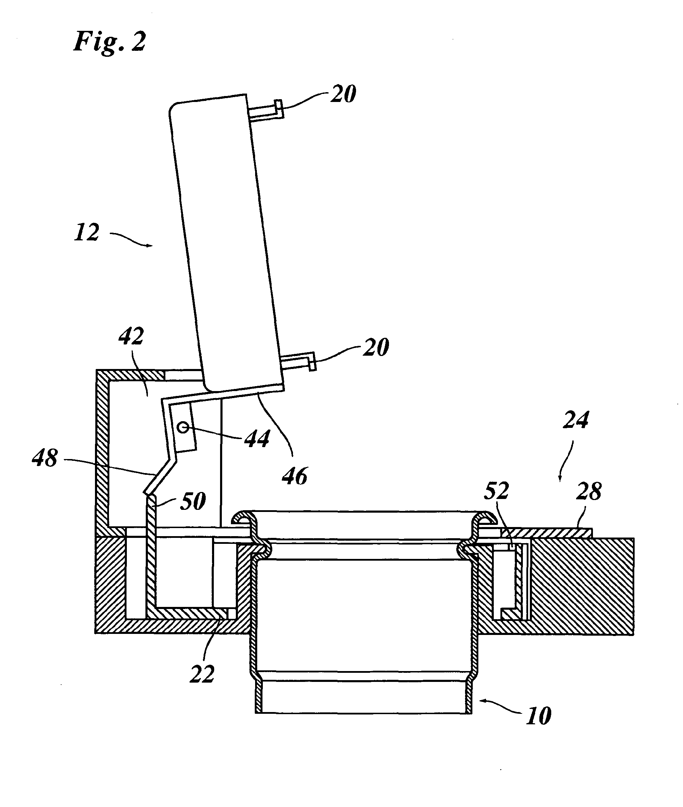

Wie Fig. 2 zeigt, ist das Verschlussglied 12 schwenkbar an der Manschette 24 gehalten. Dazu weist die Manschette an einer Stelle ihres Umfangs ein Schwenklager 42 auf, in dem eine Gelenkachse 44 für das Verschlussglied 12 gelagert ist. Die Gelenkachse 44 durchsetzt einen vom Rand des Verschlussgliedes 12 aufragenden Ansatz 46, der oberhalb der Gelenkachse nach außen abgewinkelt ist und einen Nockenfolger 48 bildet.

Das Verschlussglied 12 ist mit einer nicht gezeigten Feder, beispielsweise mit Hilfe einer die Gelenkachse 44 umgebenden Schenkelfeder, in die in Fig. 2 gezeigte Öffnungsstellung vorgespannt. Der Bajonettring 22 weist an seinem äußeren Umfangsrand einen radial vorspringenden Arm auf, von dem ein Nocken 50 aufragt, der an dem Nockenfolger 48 anliegt und so die Öffnungs-Schwenkbewegung des Verschlussgliedes 12 begrenzt.

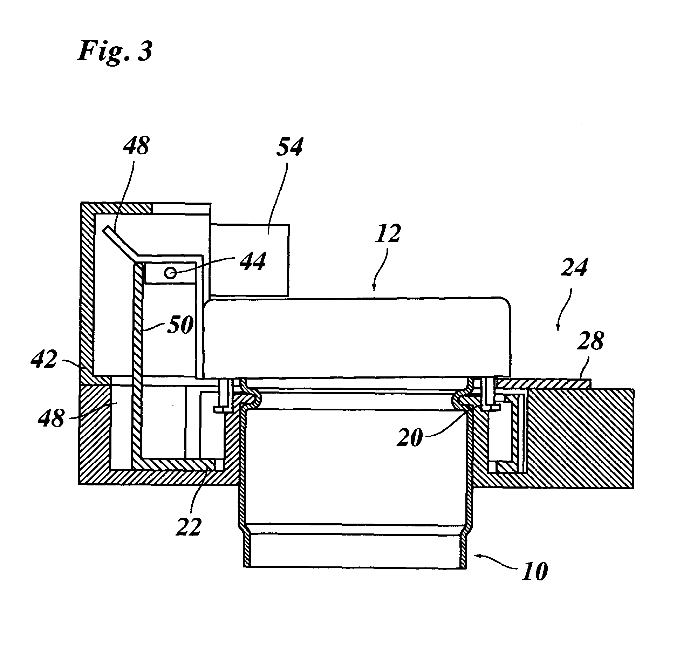

Der Nocken 50 weist einen schraubenförmig verlaufenden oberen Rand auf, so dass er, wenn der Bajonettring 22 mit Hilfe des Motors 36 gedreht wird, den Nockenfolger 48 nach oben drückt und so das Verschlussglied 12 in die Schließstellung schwenkt, wie in Fig. 3 gezeigt ist.

Gegen Ende dieser Schwenkbewegung treten die Bajonettklauen 20 durch die erwähnten Ausnehmungen des Oberteils 28 hindurch in das Innere des Bajonettrings 22 ein. In der Schnittdarstellung in Fig. 2 ist eine der erwähnten Ausnehmungen 52 im Bajonettring 22 gezeigt. Wenn das Verschlussglied 12 die Schließstellung erreicht, ist der Bajonettring 22 so weit gedreht worden, dass diese Ausnehmungen 52 mit den Bajonettklauen 20 fluchten, so dass die Bajonettklauen durch die Ausnehmungen 52 hindurch weiter in den Bajonettring eintreten können. Bei der weiteren Drehung gelangt der Bajonettring 22 dann in die Position gemäß Fig. 1, in der er das Verschlussglied 12 an den Bajonettklauen 20 verriegelt. Am Bajonettring 22 und/oder an den Bajonettklauen 20 können Schrägen ausgebildet sein, die bewirken, dass das Verschlussglied 12 beim Erreichen der Verriegelungsstellung fester gegen den Rand des Tankstutzens 10 gezogen wird und dadurch die Dichtung 18 komprimiert wird, so dass eine zuverlässige Abdichtung erreicht wird.

Bei der Drehung des Bajonettrings 22 bewegt sich der Nocken in einem Gehäuse 54, das sich längs des Umfangsrandes der Manschette 24 erstreckt.

Dem Motor 36 kann ein Weg- oder Positionsgeber zugeordnet sein, der ein Bestätigungssignal ausgibt, wenn der Bajonettring die Verriegelungsposition erreicht hat.

Wenn das Verschlussglied 12 geöffnet werden soll, so wird der Motor 36 in entgegengesetzter Richtung angetrieben, und der oben geschilderte Bewegungsablauf vollzieht sich in umgekehrter Richtung, wobei das Verschlussglied 12 durch die erwähnte Feder in die Öffnungsstellung geschwenkt wird.

In der Praxis wird der Tankstutzen 10 mit der hier beschriebenen Verschlussvorrichtung zumeist hinter einer in der Fahrzeugkarosserie gebildeten Tanköffnung liegen, die durch eine Tankklappe verschlossen ist. Wahlweise kann das Verschlussglied 12 durch ein Gestänge mit dieser Tankklappe verbunden sein, so dass, wenn das Verschlussglied 12 in die Öffnungsstellung schwenkt, zugleich auch die Tankklappe geöffnet wird. In diesem Fall kann die erwähnte Feder, die das Verschlussglied 12 in die Öffnungsstellung vorspannt, auch an der Tankklappe angreifen, die über das Gestänge das Verschlussglied in Öffnungsstellung zieht.

## Patentansprüche

1. Automatische Verschlussvorrichtung für Kraftstofftanks, mit einem zum dichten Schließen eines Tankstutzens (10) ausgebildeten Verschlussglied (12), das zwischen einer Öffnungsstellung und einer Schließstellung schwenkbar und mit Hilfe eines am Tankstutzen (10) gehaltenen, einen Motor (36) aufweisenden Antriebs und eines drehantreibbar am Tankstutzen (10) angeordneten Bajonettrings (22) in seiner Schließstellung verriegelbar ist, **dadurch gekennzeichnet**, dassder Antrieb ein Ritzel (38) aufweist, das mit einem Zahnkranz (40) am Umfang des Bajonettrings (22) kämmt, und dass die Achse des Ritzels und des Motors (36) parallel zum Tankstutzen verlaufen.

2. Verschlussvorrichtung nach Anspruch 1, bei der der Bajonettring drehbar und axialfest in einer Manschette (24) aufgenommen ist, die den Tankstutzen (10) umgibt und axialfest an diesem gehalten ist.

3. Verschlussvorrichtung nach Anspruch 2, bei der die Manschette (24) am inneren Umfangsrand einen Wulst (30) aufweist, der in eine Sicke (32) des Tankstutzens (10) eingereift.

4. Verschlussvorrichtung nach einem der vorstehenden Ansprüche, bei der am Bajonettring (22) ein Nocken (50) gebildet ist, der mit einem im Bereich eines Schwenklagers (42) vom Verschlussglied (12) vorspringenden Nockenfolger (48) zusainmenwirkt und die Schwenkbewegung des Verschlussgliedes (12) steuert.

5. Verschlussvorrichtung nach Anspruch 4, bei der das Verschlussglied (12) elastisch in seine Öffnungsstellung vorgespannt ist und der Nocken (50) die Schließbewegung des Verschlussgliedes steuert.

6. Verschlussvorrichtung nach den Ansprüchen 2 und 4, bei der das Schwenklager (42) für das Verschlussglied (12) an der Manschette (24) angeordnet ist.

7. Verschlussvorrichtung nach den Ansprüchen 5 und 6, bei der das Verschlussglied (12) über einen von dessen Rand aufragenden Ansatz (46) mit dem Schwenklager (42) verbunden ist, der Nockenfolger (48) radial vom oberen Ende des Ansatzes (46) vorspringt, und der Nocken (50) einen schraubenförmig verlaufenden oberen Rand aufweist und beim Schließen des Verschlussgliedes von unten an dem Nockenfolger (48) angreift.

## Claims

1. Automatic closure device for fuel tanks, comprising a closure member (12) that is configured for tightly closing a refuelling pipe (10) and is pivotable between an open position and a closed position and adapted to be locked in the closed position by means of a drive mechanism mounted on the refuelling pipe (10) and comprising a motor (36) and a bayonet ring arranged on the refuelling pipe and adapted to be driven for rotation, **characterized in that** the drive mechanism comprises a pinion (38) meshing with a toothed gear (40) at the periphery of the bayonet ring (22), and **in that** the axis of the pinion and the motor (36) extend in parallel with the refuelling pipe.

2. Closure device according to claim 1, wherein the bayonet ring is received rotatably but immobilized in axial direction in a sleeve (24) that surrounds the refuelling pipe (10) and is secured thereon against axial displacement.

3. Locking device according to claim 2, wherein the sleeve has, on its internal peripheral edge, a bulge (30) that engages in a depression (32) of the refuelling pipe (10).

4. Closure device according to any of the preceding claims, wherein a cam (50) is formed on the bayonet ring (22), said cam cooperating with a cam follower (48) projecting from the closure member (10) in the vicinity of a hinge (42), said cam controlling the pivotal movement on the closure member (12).

5. Closure device according to claim 4, wherein the closure member (12) is elastically biased into its open position and the cam (50) controls the closing movement of the closure member.

6. Closure device according to the claims 2 and 4, wherein the hinge (42) for the closure member (52) is arranged on the sleeve (24).

7. Closure device according to claims 5 and 6, wherein the closure member (12) is connected to the hinge (42) by a lug (46) that projects from the edge of the closure member, the cam follower (48) projects radially from a top end of the lug (46), and the cam (50) has a helically extending top edge and engages the cam follower (48) from below when the closure member is being closed.

## Revendications

1. Dispositif de fermeture automatique pour des réservoirs de carburant, comportant un élément de fermeture (12) conçu pour obturer hermétiquement un goulot de remplissage de réservoir (10), lequel élément de fermeture peut pivoter entre une position d'ouverture et une position de fermeture et peut être verrouillé dans sa position de fermeture à l'aide d'un mécanisme d'entraînement comportant un moteur (36) et maintenu sur le goulot de remplissage de réservoir (10), et d'une bague à baïonnette (22) agencée sur le goulot de remplissage de réservoir (10) de manière à pouvoir être entraînée en rotation, **caractérisé en ce que** le mécanisme d'entraînement comporte un pignon (38) qui s'engrène avec une couronne dentée (40) sur la périphérique de la bague à baïonnette (22), et **en ce que** l'axe du pignon et du moteur (36) s'étendent parallèlement au goulot de remplissage de réservoir.

2. Dispositif de fermeture selon la revendication 1, dans lequel la bague à baïonnette est reçue de manière rotative et axialement bloquée dans une manchette (24) qui entoure le goulot de remplissage de réservoir (10) et est maintenue sur celui-ci de manière axialement bloquée.

3. Dispositif de fermeture selon la revendication 2, dans lequel la manchette (24) comporte, sur son bord périphérique intérieur, un renflement (30) qui s'engage dans une moulure (32) du goulot de remplissage de réservoir (10).

4. Dispositif de fermeture selon l'une quelconque des revendications précédentes, dans lequel une came (50) est formée sur la bague à baïonnette (22), laquelle came coopère avec un suiveur de came (48) faisant saillie à partir de l'élément de fermeture (12) dans la zone d'un palier pivotant (42) et commande le mouvement de pivotement de l'élément de fermeture (12).

5. Dispositif de fermeture selon la revendication 4, dans lequel l'élément de fermeture (12) est pré-chargé élastiquement dans sa position d'ouverture et la came (50) commande le mouvement de fermeture de l'élément de fermeture.

6. Dispositif de fermeture selon les revendications 2 et 4, dans lequel le palier pivotant (42) pour l'élément de fermeture (12) est agencé sur la manchette (24).

7. Dispositif de fermeture selon les revendications 5 et 6, dans lequel l'élément de fermeture (12) est relié au palier pivotant (42) par l'intermédiaire d'une pièce d'insertion (46) faisant saillie à partir de son bord, le suiveur de came (48) fait radialement saillie à partir de l'extrémité supérieure de la pièce d'insertion (46), et la came (50) présente un bord supérieur s'étendant en forme d'hélice et s'applique contre le suiveur de came (48) lors de la fermeture de l'élément de fermeture.
